## Europäisches Patentamt
## European Patent Office
## Office européen des brevets

(11) Veröffentlichungsnummer: **0 022 598**
**B1**

(12) # EUROPÄISCHE PATENTSCHRIFT

(45) Veröffentlichungstag der Patentschrift:
17.11.82

(21) Anmeldenummer: **80200658.5**

(22) Anmeldetag: **07.07.80**

(51) Int. Cl.³: **G 01 B 5/00,** G 01 B 7/00,
B 23 Q 35/26

(54) Tastkopf.

(30) Priorität: **17.07.79 CH 6644/79**

(43) Veröffentlichungstag der Anmeldung:
**21.01.81 Patentblatt 81/3**

(45) Bekanntmachung des Hinweises auf die Patenterteilung:
**17.11.82 Patentblatt 82/46**

(84) Benannte Vertragsstaaten:
**AT BE DE FR GB IT LU NL SE**

(56) Entgegenhaltungen:
**DE-A-1 627 123**
**GB-A-532 167**
**GB-A-692 642**

(73) Patentinhaber: **Eta A.G. Ebauches-Fabrik,
Schildruststrasse 17, CH-2540 Grenchen (Canton de
Soleure) (CH)**

(72) Erfinder: **Hauert, Ulrich, im Gässli 301,
CH-3253 Schnottwil/SO (CH)**

(74) Vertreter: **Bovard, Fritz Albert et al, Bovard & Cie
Patentanwälte VSP Optingenstrasse 16,
CH-3000 Bern 25 (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Tastkopf

Die Erfindung betrifft einen an einer Meßmaschine in der Z-Achse montierten Tastkopf mit einem zylindrischen Gehäuse, einem im Gehäuse untergebrachten, gegen Federwirkung axial verschiebbaren Meßtaster und einem von dem Axialmeßtaster separaten Radialmeßtaster, dessen Längsachse in der Ruhestellung mit der Z-Achse zusammenfällt, welcher Radialmeßtaster einen in Form einer Kugelzone gebildeten Kugelkopf, eine Tastscheibe zum Andrücken an das zu messende Werkstück oder die abzustastende Lehre und einen den Kugelkopf mit der Tastscheibe verbindenden Schaft aufweist, der durch eine im Gehäuseboden vorgesehene Bohrung mit Spiel durchgeführt ist, wobei die untere ebene Fläche des Kugelkopfes auf der Bodenfläche des Gehäuses aufliegt, die obere ebene Fläche des Kugelkopfes eine Auflagefläche für den Axialmeßtaster bildet und die kugelige Umfangsfläche des Kugelkopfes spielfrei auf der Innenwand des Gehäuses aufliegt.

Die bekannten Tastköpfe können die Messungen nur in axialer Richtung ausführen. Ein solcher Tastkopf kann mit einem Hebel ausgerüstet werden, welcher seitwärts angefahren werden kann. Der Tastkopf mit einem solchen Hebel kann aber die Messungen nur in einer Seitenrichtung ausführen.

In der DE-OS 27 12 761 ist ein Tastkopf beschrieben, der im Meßkopf einer Koordinatenmeßmaschine angeordnet ist. Der Tastkopf weist einen Taster auf, der an einer Feder befestigt ist, welche Feder in einer senkrecht zur Symmetrieachse des Tastkopfes angeordneten Ebene liegt. Durch vier Wandler wird die Auslenkung des Tasters beim Antasten einer Fläche eines Werkstückes relativ zum Meßkopf gemessen.

Durch die Anordnung von vier Wandlern in dem Zylinder des Tastkopfes ist der Tastkopf zu groß geworden; außerdem ist die Konstruktion gerade aus dem Grunde, daß mehrere Wandler verwendet werden, kostspielig.

Aus der DE-OS 1 627 123 ist ein Kopiertaster bekannt, der in einer Ebene in allen Richtungen ausgelenkt werden kann. Der Kopiertaster weist ein zylindrisches Gehäuse, einen im Gehäuse untergebrachten, gegen Federwirkung axial verschiebbaren Meßtaster und einen von dem Axialmeßtaster separaten Radialmeßtaster auf. Der Radialmeßtaster besitzt einen Kugelkopf und eine Tastscheibe, die miteinander mittels eines Schaftes verbunden sind. Der Schaft ist durch eine im Gehäuseboden vorgesehene Bohrung mit Spiel durchgeführt. In Ruhestellung des Kopiertasters liegt die gesamte Unterfläche des Kugelkopfes auf der Bodenfläche des Gehäuses. Die kugelige Umfangsfläche des Kugelkopfes liegt spielfrei auf der Innenwand des Gehäuses auf. Bei der Berührung der Innenwand der Bohrung einer Schablone durch die Tastscheibe wird der Kugelkopf von der Bodenfläche des Gehäuses angekippt, wodurch der Axialmeßtaster gehoben wird, welche Bewegung zu einer Meßuhr weitergeleitet wird.

Der Kopiertaster wird hier als Fühler nur zum Abtasten der Kontur der Schablone und Übertragung im Verhältnis 1 : 1 verwendet werden; die Auslenkung des Radialmeßtasters und die Übertragung der Ankippbewegung an den Axialmeßtaster sind nur in kleinen Ausmaßen möglich.

Es ist die Aufgabe der Erfindung, einen Tastkopf zu schaffen, mittels welchem die Messung der Abmaße eines Werkstückes präzis ausgeführt werden kann, um eine genau definierte Geometrie zu erhalten. Der Meßweg eines solchen Tastkopfes soll ausreichend groß sein, um die Messung von auch verhältnismäßig großen Bohrungen zu sichern. Die Ausmaße des Tastkopfes sollen klein gehalten werden.

Diese Aufgaben werden erfindungsgemäß bei dem eingangs genannten Tastkopf dadurch gelöst, daß der Axialmeßtaster mit der oberen ebenen Fläche des Kugelkopfes des Radialmeßtasters nur in einem Punkt in Berührung steht, der stehts auf der Z-Achse liegt.

Mit Vorteil ist der Kugelkopf bei der Auslenkung des Radialmeßtasters aus der Z-Achse von der Fläche des Gehäusebodens einseitig abhebbar, wodurch sich der Berührungspunkt des Axialmeßtasters mit der oberen ebenen Fläche des Kugelkopfes entlang der Z-Achse um einen Abstand verschiebt.

Der Erfindungsgegenstand wird nachstehend anhand der Zeichnung beispielsweise näher erläutert. Es zeigt

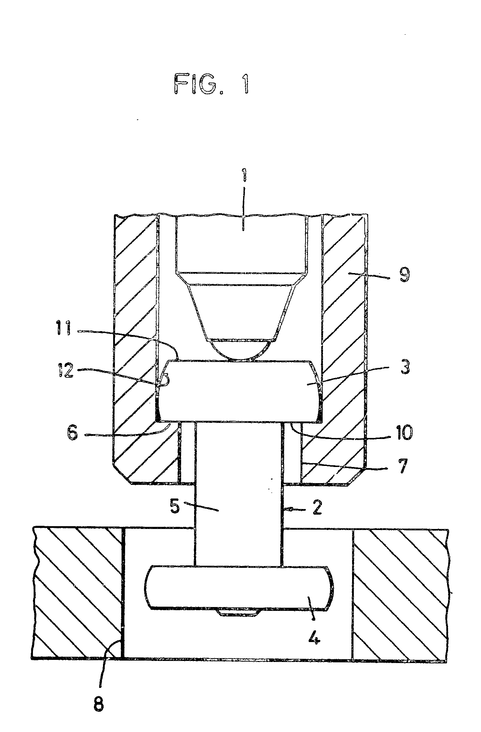

Fig. 1 eine schematische Ansicht eines in einem Zyilnder eines Tastkopfes untergebrachten Radialmeßtasters in seiner Ruhelage,

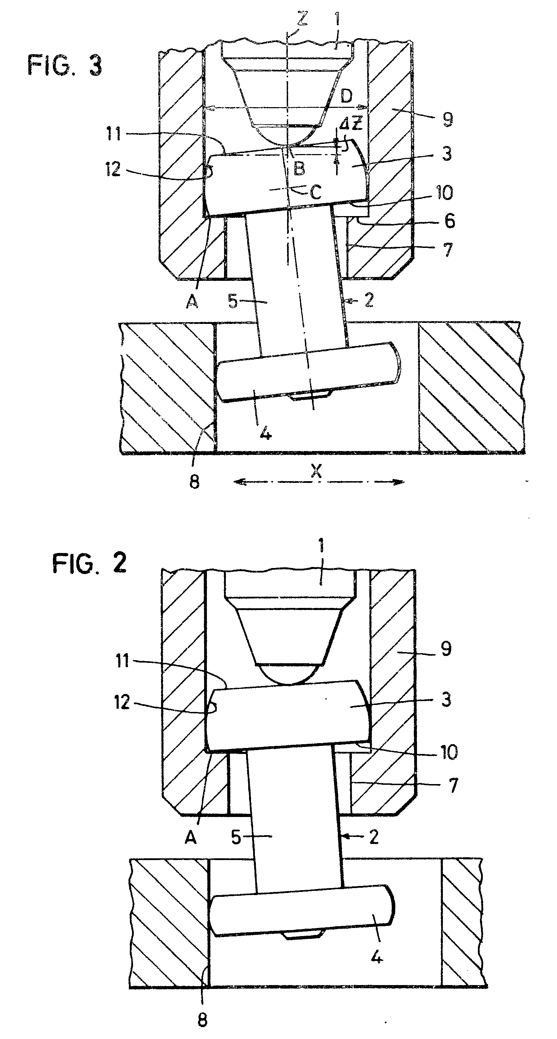

Fig. 2 eine schematische Ansicht des Radialmeßtaters nach der Fig. 1, der in eine verhältnismäßig große Bohrung eines Werkstückes eingeführt wurde,

Fig. 3 eine schematische Ansicht des Radialmeßtasters nach der Fig. 1, der in eine verhältnismäßig kleine Bohrung eines Werkstückes eingeführt wurde.

An einer nicht dargestellten, an sich bekannten Meßmaschine ist in der Z-Achse ein Tastkopf montiert, der ein zylindrisches Gehäuse 9 und einen im Gehäuse untergebrachten Axialmeßtaster 1 aufweist. Der Axialmeßtaster 1 ist gegen die Wirkung einer nicht dargestellten Feder, die ebenfalls im Gehäuse 9 angeordnet ist, axial verschiebbar, wodurch in bekannter Weise Signale erzeugt werden.

Um in einem beliebigen Winkel auf der Ebene, welche rechtwinklig zu der Z-Achse des Axialmeßtasters 1 liegt, anfahren zu können, ist in dem Tastkopf weiter ein Radialmeßtaster 2 vorgesehen, der von dem Axialmeßtaster 1 körperlich getrennt ist. Der Radialmeßtaster 2 besteht aus einem Kopf 3, einer Tastscheibe 4 und einem den Kopf 3 mit der Tastscheibe 4 verbindenden Schaft 5. Der Kopf 3 hat die Form einer Kugelzone mit einer unteren ebenen Fläche 10, einer oberen ebenen Fläche 11 und einer kugeligen Umfangsfläche 12. Die Tastscheibe 4, die zum Andrücken an das zu messende Werkstück 8 oder eine abzutastende, nicht dargestellte Lehre bestimmt ist, hat ebenfalls die Form einer Kugelzone, wobei ihre Längsachse wie diejenige des Kugelkopfes 3 in der Ruhelage des Radialmeßtasters 2 zu der Z-Achse quer liegt. In der Ruhelage liegt die Längsachse des Radialmeßtasters 2 in der Z-Achse.

Im Boden 6 des Zylinders 9 ist eine Bohrung 7 vorgesehen, durch welche der Schaft 5 durchgeführt ist, so daß der Kugelkopf 3 innerhalb des Zylinders 9 und die Tastscheibe 4 außerhalb des Zylinders 9 liegen. Der Schaft 2 ist durch die Bohrung 7 mit Spiel durchgeführt; er kann eine beliebige Länge haben. Die untere flache Fläche 10 des Kugelkopfes 3 liegt in der Ruhelage des Radialmeßtasters 2 auf der Fläche des Bodens 6 des Zylinders 9 auf. Die obere ebene Fläche des Kugelkopfes 3 bildet eine Auflagefläche für den Axialmeßtaster 1. Mit B ist der Berührungspunkt des Axialmeßtasters 1 mit der oberen Fläche 11 des Kugelkopfes 3 bezeichnet, welcher Punkt stets auf der Z-Achse liegt. Die kugelige Umfangsfläche 12 des Kugelkopfes 3 liegt spielfrei auf der Innenwand des Gehäuses 9 auf, weil der Durchmesser des Kugelkopfes 3 dem Durchmesser D des Innenraumes des Zylinders 9 genau entspricht. Für die Wiederholgenauigkeit ist der genaue Durchmesser D von großer Wichtigkeit.

Wird gegen eine Wand einer zu messenden Bohrung eines Werkstückes angefahren und anschließend in einer Richtung um einen festen Weg verschoben, stützt sich die Umfangsfläche der Tastscheibe 4 gegen die Wand der zu messenden Bohrung und bringt den ganzen Radialmeßtaster 2 aus der Ruhelage. Dies bewirkt, daß der Kugelkopf 3 einseitig von der Gehäusebodenfläche 6 abgehoben wird. Dabei dreht sich der Kugelkopf 3 um den Punkt A und hebt sich auf der anderen Seite von der Bodenfläche 6 ab. Der Berührungspunkt B des Acialmeßtasters 1 mit der oberen ebenen Fläche 11 des Kugelkopfes 3 verschiebt sich somit in axialer Richtung auf der Z-Achse um einen Abstand ΔZ. Auf diese Weise wird der Axialmeßtster 1 betätigt und erzeugt ein Signal. Es ist vorteilhaft, wenn sich der Mittelpunkt C, in welchem sich die Z-Achse mit der Längsachse des ausgelenkten Radialmeßtasters 2 schneidet, so tief wie möglich befindet.

Nach der vollendeten Messung wird der Radialmeßtaster 2 aus seiner Auslenkung durch den unter Federkraft stehenden Axialmeßtaster 1 wieder in die Ruhelage gebracht.

Beim Vergleich des Werkstückes mit einer bzw. zwei Lehren wird wie folgt vorgegangen. Der Radialmeßtaster 2 wird in der Z-Achse in die Bohrung einer Ringlehre, welche dem oberen Abmaß entspricht, eingeführt. Der Radialtaster 2 bzw. das Werkstück wird mit einem nicht dargestellten Kreuzschlitten der Meßmaschine in der X-Achse verfahren, bis die Tastscheibe 4 die Wand der Bohrung berührt und leicht aus ihrer Ruhelage gedrückt wird. Die Position des Kreuzschlittens und der vom Axialmeßtaster 1 angezeigte Wert werden registriert. Der Radialtaster 2 wird nun in der Gegenrichtung (um 180°) minus X-Achse verfahren, bis sich die Tastscheibe 4 erneut aus ihrer Ruhelage bewegt. Die beiden Werte vom Kreuzschlitten wie auch vom Radialtaster werden ebenfalls registriert. Der Kreuzschlitten wird nun wieder in die Mittelstellung (Ausgangslage) gebracht und anschließend in der nichtdargestellten Y-Achse verfahren, bis die Tastscheibe 4 die Wand er Bohrung berührt und leicht aus ihrer Ruhelage gedrückt wird. Die Werte vom Kreuzschlitten wie auch vom Radialtaster werden registriert. Dasselbe wird anschließend in der Gegenrichtung minus Y-Achse ausgeführt. Das obere Abmaß der zu messenden Bohrung ist somit festgehalten.

Für das untere Abmaß wird mit der entsprechenden Ringlehre der Vorgang wiederholt, wobei die vier Werte am Maschinentisch genau wie bei der ersten Eichung angefahren werden müssen.

Wird ein Werkstück anstelle der Lehren eingespannt und der Meßvorgang wie oben ausgeführt, so kann anschließend rechnerisch durch einfache Vergleiche der IST- und SOLLwerte festgestellt werden, ob das Werkstück innerhalb der Abmaße liegt oder nicht. Ferner kann rechnerisch der Mittelpunkt bzw. dessen Abweichung vom SOLLwert und sogar die Richtung auf der X-Y-Ebene ermittelt werden.

Es ist ferner möglich, mit entsprechenden Lehren mehrere Bohrungen gleichzeitig zu messen und rechnerisch deren Achsdistanzen zu ermitteln.

Mit dem oben beschriebenen Tastkopf kann die ganze Messung in Sekunden ausgeführt werden. In einer Messung können zwei Distanzen und Durchmesser gemessen werden. Die Bauart des oben beschriebenen Tastkopfes ist gegenüber den bekannten Tastköpfen klein; der Durchmesser des oben beschriebenen Tastkopfes mißt 12 mm oder kann sogar noch kleiner sein.

**Patentansprüche**

1. An einer Meßmaschine in der Z-Achse montierter Tastkopf mit einem zylindrischen Gehäuse (9), einem im Gehäuse (9) untergebrachten, gegen Federwirkung axial verschiebbaren Meßtaster (1) und einem von dem Axialmeßtaster (1) separaten Radialmeßtaster (2), dessen Längsachse in der Ruhestellung mit der Z-Achse zusammenfällt, welcher Radialmeßtaster (2) einen in Form einer Kugelzone gebildeten Kugelkopf (3), eine Tastscheibe (4) zum Andrücken an das zu messende Werkstück (8) oder die abzutastende Lehre und einen den Kugelkopf (3) mit der Tastscheibe (4) verbindenden Schaft (5) aufweist, der durch eine im Gehäuseboden (6) vorgesehene Bohrung (7) mit Spiel durchgeführt ist, wobei die untere ebene Fläche (10) des Kugelkopfes (3) auf der Bodenfläche des Gehäuses (9) aufliegt, die obere ebene Fläche (11) des Kugelkopfes (3) eine Auflagefläche für den Axialmeßtaster (1) bildet und die kugelige Umfangsfläche (12) des Kugelkopfes (3) spielfrei auf der Innenwand des Gehäuses (9) aufliegt, dadurch gekennzeichnet, daß der Axialmeßtaster (1) mit der oberen ebenen Fläche (11) des Kugelkopfes (3) des Radialmeßtasters (2) nur in einem Punkt (B) in Berührung steht, der stets auf der Z-Achse liegt.

2. Tastkopf nach Patentanspruch 1, dadurch gekennzeichnet, daß der Kugelkopf (3) bei der Auslenkung der Längsachse des Radialmeßtasters (2) aus der Z-Achse von der Fläche des Gehäusebodens (6) einseitig abhebbar ist, wodurch sich der Berührungspunkt (B) des Axialmeßtasters (1) mit der oberen ebenen Fläche (11) des Kugelkopfes (3) auf der Z-Achse um einen Abstand (ΔZ) verschiebt.

## Claims

1. Feeler head mounted in the vertical axis on a measuring machine, having a cylindrical housing (9), a measuring feeler (1) accommodated in the housing (9) and axially displaceable against spring action, and, separate from the axial measuring feeler (1), a radial measuring feeler (2) having a longitudinal axis coinciding in the rest position with the vertical axis and comprising a ball end (3) formed in the shape of a spherical zone, a feeler disc (4) to be pressed against the workpiece (8) to be measured or the gauge to be palpated, and a shank (5) connecting the ball end (3) to the feeler disc (4), which shank passes with play through a bore (7) provided in the bottom (6) of the housing, the lower plane face (10) of the ball end (3) resting upon the surface of the bottom of the housing (9), the upper plane face (11) of the ball end (3) forming a contact surface for the axial measuring feeler (1), and the spherical circumferential face (12) of the ball end (3) resting without play against the inside wall of the housing (9), characterized in that the axial measuring feeler (1) contacts the upper plane face (11) of the ball end (3) of the radial measuring feeler (2) at only one point (B), which ist always situated on the vertical axis.

2. Feeler head according to claim 1, characterized in that the ball end (3) is unilaterally liftable from the surface of the bottom (6) of the housing upon deflection of the longitudinal axis of the radial measuring feeler (2) away from the vertical axis (Z), whereby the point (B) of contact of the axial measuring feeler (1) with the upper plane face (11) of the ball end (3) is displaced on the vertical axis (Z) by a distance (ΔZ).

## Revendications

1. Palpeur de mesure monté selon l'axe Z d'une machine de mesure, et comprenant un corps (9) cylindrique, un élément de mesure (1) logé dans le corps (9), coulissant axialement contre l'action d'un ressort et un élément de mesure radial (2) dont l'axe longitudinal coïncide en position de repos avec l'axe Z, cet élément radial (2) comportant lui-même une tête à rotule (3) ayant la forme d'une zone de sphère, un disque palpeur (4) destiné à être appuyé contre la pièce à mesurer (8) ou la jauge et un arbre (5) qui relie la tête à rotule (3) au disque palpeur (4) et passe avec jeu dans un perçage (7) prévu dans le fond (6) du corps, la surface inférieure plane (10) de la tête à rotule (3) reposant sur la surface de fond du corps (9), la surface supérieure plane (11) de la tête à rotule (3) formant une surface d'appui pour l'élément de mesure axial (1) et la surface périphérique sphérique (12) de la tête à rotule (3) étant ajustée sans jeu à la face interne de la paroi du corps (9), caractérisé en ce que l'élément de mesure axial (1) vient en contact avec la surface supérieure plane (11) de la tête à rotule (3) de l'élément de mesure radial (2) qu'un point (B) qui se trouve constamment sur l'axe Z.

2. Palpeur de mesure selon la revendication 1, caractérisé en ce que la tête à rotule (3) est capable de se so ulever d'un côté au-dessus de la surface du fond (6) du corps lors d'une déviation de l'axe longitudinal de l'élément de mesure radial (2) par rapport à l'axe Z, de sorte que le point de contact (B) de l'élément de mesure axial (1) avec la surface supérieure plane (11) de la tête à routle (3) se déplace d'une distance (ΔZ).

FIG. 1

FIG. 3

FIG. 2